(19) Europäisches Patentamt
European Patent Office
Office européen des brevets

(11) EP 4 468 408 A1

# (12) EUROPEAN PATENT APPLICATION
published in accordance with Art. 153(4) EPC

(43) Date of publication:
**27.11.2024 Bulletin 2024/48**

(21) Application number: **23742892.5**

(22) Date of filing: **17.01.2023**

(51) International Patent Classification (IPC):
***H01M 4/36*** *(2006.01)* ***H01M 10/0525*** *(2010.01)*
***H01M 10/42*** *(2006.01)*

(52) Cooperative Patent Classification (CPC):
Y02E 60/10

(86) International application number:
**PCT/CN2023/072609**

(87) International publication number:
**WO 2023/138577 (27.07.2023 Gazette 2023/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.01.2022 CN 202210070564**

(71) Applicant: **Shenzhen Innovazone Technology Co., Ltd.**
**Shenzhen, Guangdong 518000 (CN)**

(72) Inventors:
- **LIN, Lvhuan**
  **Shenzhen, Guangdong 518000 (CN)**
- **WAN, Yuanxin**
  **Shenzhen, Guangdong 518000 (CN)**
- **KONG, Lingyong**
  **Shenzhen, Guangdong 518000 (CN)**
- **YU, Yonglong**
  **Shenzhen, Guangdong 518000 (CN)**

(74) Representative: **KIPA AB**
**Drottninggatan 11**
**252 21 Helsingborg (SE)**

## (54) POSITIVE ELECTRODE LITHIUM SUPPLEMENTING ADDITIVE, AND PREPARATION METHOD THEREFOR AND USE THEREOF

(57) The present application discloses a positive electrode lithium supplementing additive, and a preparation method therefor and a use thereof. The positive electrode lithium supplementing additive of the present application is of a core-shell structure, a core of the core-shell structure comprises a positive electrode lithium supplementing material, and a coating layer covering the core comprises a piperidine group-containing polymer. The polymer used in the positive electrode lithium supplementing additive of the present application imparts the effect of inhibiting active oxygen and the effect of capturing a free radical generated during charging and discharging of a lithium ion battery to the coating layer, such that the amount of gas generated in the charging and discharging process of the lithium ion battery is obviously reduced, the volume expansion of the lithium ion battery is reduced, and then the stability and safety of charging and discharging of the lithium ion battery are effectively improved and the lithium supplementing effect is improved; the preparation method for the positive electrode lithium supplementing additive can ensure that the structure and electrochemical properties of the prepared positive electrode lithium supplementing additive are stable, and the efficiency is high and the production cost is saved. The positive electrode lithium supplementing additive can be applied to positive electrode sheets and secondary batteries.

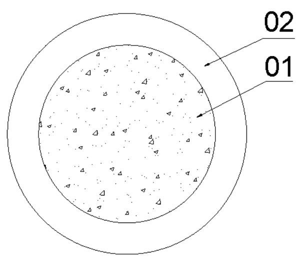


FIG. 1

EP 4 468 408 A1

## Description

This application claims the benefit of Chinese patent application No. 202210070564.7, titled "Cathode Lithium-Supplementing Additive, Preparation Method Therefor and Application Thereof", filed on January 20, 2022, with the Chinese Patent Office, the contents of which are incorporated herein by reference.

## TECHNICAL FIELD

The present application relates to the technical field of secondary batteries, in particular, to a cathode lithium-supplementing additive, a preparation method therefor and application thereof.

## BACKGROUND

The oil energy crisis in the 1960s and 1970s has forced people to look for new alternative energy sources. The public awareness of environmental protection and energy crisis has also increased. Lithium-ion batteries are considered to be one of the most promising energy sources due to their high operating voltage and energy density, relatively small self-discharge level, no memory effect, no heavy metal pollution such as lead and cadmium, and ultra-long cycle life. Lithium-ion batteries are widely used in electric vehicles, power tools, mobile electronic consumer products, energy storage and so on.

At present, the most commonly used cathode materials for lithium-ion batteries are lithium iron phosphate, lithium nickel cobalt manganese (aluminum) ternary materials (commonly known as ternary materials), lithium cobalt oxide, lithium manganese oxide, etc., and the most commonly used anode materials are carbon-based graphite materials and silicon-based anode materials. Although lithium-ion batteries have various advantages, during the first charging process of lithium-ion batteries, a solid electrolyte interface (SEI) is usually formed on the anode surface. This process consumes a large amount of $Li^+$, which means that part of $Li^+$ deintercalated from the cathode material is irreversibly consumed, and the reversible specific capacity of the corresponding battery cell is reduced. Anode materials, especially silicon-based anode materials, will further consume $Li^+$, causing lithium loss in cathode materials, reducing the initial coulombic efficiency and capacity of lithium-ion batteries. For example, in a lithium-ion battery system using a graphite anode, the first charge will consume about 10% of the lithium source. When using anode materials with high-specific capacity, such as alloys (silicon, tin, etc.), oxides (silicon oxide, tin oxide) and amorphous carbon anodes, the consumption of cathode lithium sources will be further aggravated.

In order to improve the problem of low coulombic efficiency caused by irreversible loss of the anode, researchers have developed lithium-rich compounds as additives to solve the problem of irreversible loss of lithium ions during the first charge and discharge.

However, it has been found during research and practical applications that the use of existing lithium-supplementing additives also leads to an increase in gas generation during the formation stage of lithium-ion batteries, which can cause swelling inside the closed battery system, leading to battery volume expansion and safety issues.

At present, the research on cathode lithium-supplementing additives is still in its initial stage, and a stable and mature product has not yet been formed. There is still no clear and systematic research result on the mechanism of gas generation in lithium-supplementing additives. For conventional lithium-ion batteries, reactions such as SEI decomposition, electrolyte decomposition, and reaction between anode active materials and binders are prone to gas generation, and usually these reactions are not carried out independently, multiple reactions are likely to take place at the same time. In order to solve the above-mentioned problem of gas generation in lithium-ion batteries, existing methods include utilizing anhydride compounds, cyclic esters such as $\gamma$-butyrolactone, and polynitrile compounds as additives to add to the electrolyte to form cathode and anode protective films so as to inhibit the gas generation, but these measures often cause problems such as poor ion conductivity of the protective film, increased impedance, and instability of the cathode and anode protective films. Therefore, there is an urgent need to effectively improve the gas generation caused by the use of lithium-supplementing additives without affecting other properties of lithium-ion batteries, and this has a significant impact on the improvement of performance of lithium-ion batteries.

## TECHNICAL PROBLEMS

An objective of the present application is to provide a cathode lithium-supplementing additive and a preparation method thereof to overcome the above-mentioned deficiencies in existing technologies, so as to solve the problem of increased gas generation in the lithium-ion batteries caused by the existing cathode lithium-supplementing additives.

Another objective of the present application is to provide a cathode plate and a secondary battery containing the cathode plate to solve the problem of increased gas generation accompanied by improvement in the initial coulombic efficiency in the existing secondary battery.

## TECHNICAL PROPOSALS

In order to achieve the above objectives, a first aspect of the present application provides a cathode lithium-supplementing additive. The cathode lithium-supplementing additive of the present application has a core-shell structure, a core of the core-shell structure includes a cathode lithium-supplementing material, and a coating layer covering the core contains a polymer having a molecular structure represented by general formula I below:

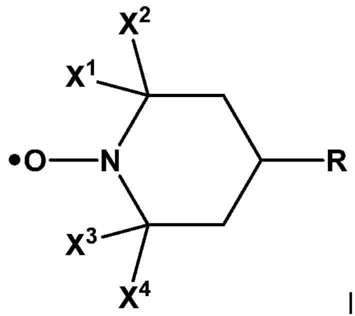

I;

in the general formula I, $X_1$, $X_2$, $X_3$, and $X_4$ are independently any one of a hydrogen atom and an alkyl group having 1 to 3 carbon atoms, and R is a polymer segment.

Further, the alkyl group includes any one of a methyl group, an ethyl group, a propyl group, and an isopropyl group.

Further, the polymer segment includes at least one chain segment of a carbon chain polymer, a heterochain polymer, and a non-carbon chain polymer.

Further, the piperidine group contained in the general formula I is a branch or a terminal group.

Further, a mass content of the polymer in the cathode lithium-supplementing additive is 0.1%-5%.

Further, R includes one or more of a polyolefin segment, a polyacrylate segment, a polymethacrylate segment, a polyester segment, a polyamide segment, a polyurethane segment, a polyether segment, a polysilane segment, and a polysiloxane segment.

Further, $X_1$, $X_2$, $X_3$, and $X_4$ are all a methyl group, and R is one or more of a polyolefin segment, a polyacrylate segment, a polymethacrylate segment, a polyester segment, a polyamide segment, a polyurethane segment, a polyether segment, a polysilane segment, and a polysiloxane segment.

Specifically, the polymer includes one or more of the following molecular formulas $I_1$ to $I_6$:

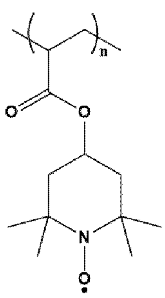

$I_1$

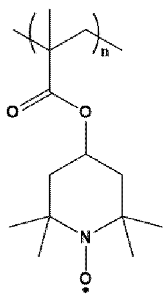

$I_2$

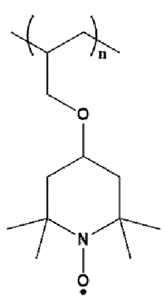

$I_3$

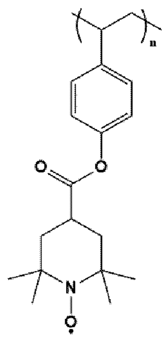

$I_4$

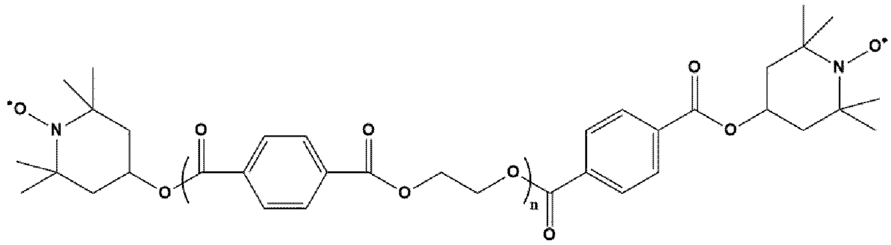

$I_5$

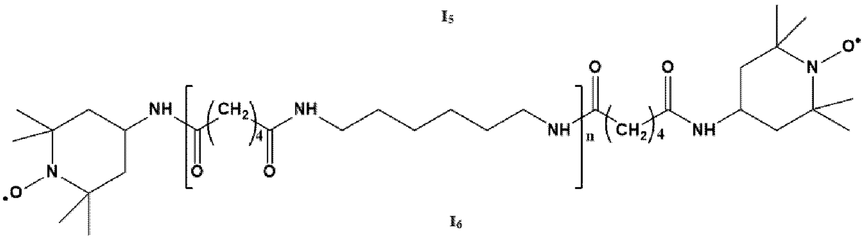

$I_6$

Further, the coating layer includes a polymer coating layer, and a polymer contained in the polymer coating layer includes the polymer.

Further, the cathode lithium-supplementing material includes a cathode lithium-supplementing material containing an oxygen atom.

Still further, the coating layer further includes a hydrophobic encapsulation layer, and the hydrophobic encapsulation layer is coated on the core, and the polymer coating layer is coated on a surface of the hydrophobic encapsulation layer away from the core.

Still further, the hydrophobic encapsulation layer includes at least one of an ionic conductor encapsulation layer and an electronic conductor encapsulation layer.

Specifically, a material of the ionic conductor encapsulation layer includes at least one of a perovskite-type ionic conductive material, a NASICON-type ionic conductive material, and a garnet-type ionic conductive material.

Specifically, a material of the electronic conductor encapsulation layer includes at least one of a carbon material, a conductive oxide, and a conductive organic material.

Still further, the hydrophobic encapsulation layer contains a polymer having a molecular structure represented by the general formula I.

Still further, a thickness of the hydrophobic encapsulation layer is 1-100 nm.

A second aspect of the present application provides a preparation method for the cathode lithium-supplementing additive of the present application. The preparation method for the cathode lithium-supplementing additive of the present application includes the following steps:

mixing a raw material of particles of a cathode lithium-supplementing material with a solution of a polymer having a molecular structure represented by general formula I below to form a mixture; and

drying the mixture in a protective atmosphere so that the polymer is dispersed on surfaces of the particles of the cathode lithium-supplementing material to obtain a cathode lithium-supplementing additive;

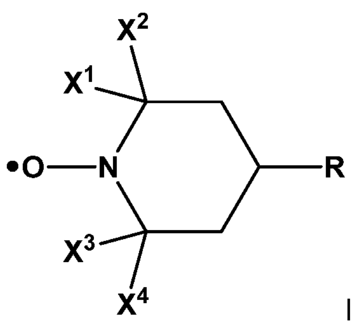

I;

where $X_1$, $X_2$, $X_3$, and $X_4$ in the general formula I are independently any one of a hydrogen atom and an alkyl group having 1 to 3 carbon atoms, and R is a polymer segment.

Further, the polymer forms a polymer coating layer coated on the particles of the cathode lithium-supplementing material.

Further, the raw material of the particles of the cathode lithium-supplementing material includes a core containing the cathode lithium-supplementing material and a hydrophobic encapsulation layer coated on the core.

Further, a mass concentration of the polymer having the molecular structure represented by general formula I in the solution is 2%-20%.

Further, a solvent of the solution includes at least one of methanol, ethanol, n-hexane, cyclohexane, ethyl acetate, toluene, xylene, tetrahydrofuran, N-methylpyrrolidone, N,N-dimethylformamide and the like.

In a third aspect of the present application, a cathode plate is provided. The cathode plate of the present application includes a cathode current collector and a cathode active layer bonded to a surface of the cathode current collector, the cathode active layer contains the cathode lithium-supplementing additive of the present application or the cathode lithium-supplementing additive prepared by the preparation method for a cathode lithium-supplementing additive of the present application.

In a fourth aspect of the present application, a secondary battery is provided, which includes a cathode plate and an anode plate, the cathode plate is the cathode plate of the present application.

Further, a capacity retention rate of the secondary battery after 300 cycles at room temperature is higher than 87%.

Further, a capacity retention rate of the secondary battery after 300 cycles at 45°C is higher than 80%.

Further, a thickness change rate of the secondary battery after 300 cycles at 45°C is less than 15%.

Compared with the existing technologies, the advantageous effects of the present application are as follows.

On the one hand , the polymer represented by general formula I contained in the coating layer of the cathode lithium-supplementing additive of the present application can effectively inhibit the generation of active oxygen inside the lithium-supplementing material; on the other hand, it can effectively inhibit the generation of free radicals during the charging and discharging of the lithium-ion battery, and can effectively capture the free radicals generated during the charging and discharging of the lithium-ion battery to form a stabilized product. Therefore, the polymer with the molecular structure represented by the general formula I contained in the cathode lithium-supplementing additive of the present application enables the coating layer to inhibit active oxygen and capture the free radicals generated during the charging and discharging of the lithium-ion battery, so that the gas generation in the lithium-ion battery during charging and discharging process is significantly decreased, and the volume expansion of the lithium-ion battery is reduced, thereby effectively improving the stability and safety of the charging and discharging of the lithium-ion battery, and at the same time improving its lithium supplement effect.

The preparation method for the cathode lithium-supplementing additive of the present can effectively disperse the polymer represented by the general formula I on the surface of the particles of the cathode lithium-supplementing material, so that the prepared cathode lithium-supplementing additive has the function of inhibiting active oxygen and capturing free radicals generated during the charging and discharging of lithium-ion batteries in addition to the lithium supplement effect of the above-mentioned cathode lithium-supplementing additive, so that the gas generation in the lithium-ion battery during charging and discharging process is significantly reduced. Moreover, the preparation method for the cathode lithium-supplementing additive can ensure stable structure and electrochemical performance, high efficiency, and low production costs of the prepared cathode lithium-supplementing additive.

Since the cathode plate of the present application contains the cathode lithium-supplementing additive of the present application, the cathode lithium-supplementing additive contained in the cathode plate of the present application can supplement lithium in the first cycle of the charging process, and can effectively capture and consume harmful radicals generated in the lithium-ion battery during the charging and discharging process and effectively reduce the gas generation phenomenon of the lithium-ion battery during the charging and discharging process, thereby effectively improving the charging and discharging stability and safety of the lithium-ion battery.

The secondary battery of the present application produces little gas during cycles, which effectively reduces or avoids volume expansion and the like, so that it has high cycle performance, thereby having high safety performance, long service life, high initial coulombic efficiency and capacity, and stable electrochemical performance.

## DESCRIPTION OF THE DRAWINGS

In order to more clearly illustrate the technical proposals in the embodiments of the present application, the drawings to be used in the description of the embodiments or exemplary technologies will be briefly introduced below. Apparently, the drawings in the following description are only some embodiments of the present application, for those of ordinary skill in the art, other drawings can be obtained based on these drawings without exerting creative efforts.

FIG. 1 is a schematic diagram of a structure of a cathode lithium-supplementing additive according to an embodiment of the present application; and

FIG. 2 is a schematic diagram of another structure of the cathode lithium-supplementing additive according to an embodiment of the present application.

## DETAILED DESCRIPTION OF THE EMBODIMENTS

In order to make the purpose, technical proposals, and advantages of the present application more clear, the present application will be further described in detail below with reference to the embodiments. It should be understood that the specific embodiments described here are only for explaining the present application and are not intended to limit the present application.

In this application, the term "and/or" refers to the association relationship of associated objects, indicating that there may be three relationships. For example, A and/or B may refer to: A exists alone, A and B exist at the same time, and B exists alone. A and B may be singular or plural. The character "/" generally indicates that the associated objects are in an "or" relationship.

In this application, "at least one" means one or more, and "a plurality of" means two or more. "At least one of the following" or similar expressions refers to any combination of these items, including any combination of single items or plural items. For example, "at least one of a, b or c", or "at least one of a, b and c", can both mean: a, b, c, a-b (namely a and b), a-c, b-c, or a-b-c, where a, b, c may be singular or plural.

It should be understood that in the various embodiments of the present application, the value of the serial numbers of the above-mentioned processes does not indicate the order of execution, some or all of the steps can be executed in parallel or sequentially, and the execution order of each process should be determined by its function and internal logic, and should not constitute any limitation on the implementation process of the embodiments of the present application.

The terms used in the embodiments of the present application are only for the purpose of describing specific embodiments, and are not intended to limit the present application. The singular forms "a", "said" and "the" used in the embodiments of the present application and the appended claims are also intended to include plural forms, unless the context clearly indicates otherwise.

The weight of the relevant components mentioned in the embodiments of the present application may not only refer to the specific content of each component, but also indicate the proportional relationship of the weights of the components. Therefore, the content of the relevant components is within the scope disclosed in the embodiments of the present application as long as it is proportionally scaled up or down according to the embodiments of the present application. Specifically, the mass described in the embodiments of the present application may be a mass unit known in the art of chemical engineering such as μg, mg, g, kg, etc.

The terms "first" and "second" are used only for descriptive purposes to distinguish objects such as substances from each other, and should not be understood as indicating or implying relative importance or implicitly indicating the number of indicated technical features. For example, without departing from the scope of the embodiments of the present application, the first XX may also be referred to as the second XX, and similarly, the second XX may also be referred to as the first XX. Thus, the features defined as "first" and "second" may explicitly or implicitly include one or more of the features.

It has been found through extensive studies that during formation of SEI film and during the charging and discharging process of lithium-ion batteries, the decomposition of the SEI film, decomposition of the electrolyte, and reactions between anode active materials and binders are often accompanied by the formation of various free radicals, which can combine with each other or further trigger other chain reactions and ultimately produce gas. When the lithium-ion battery contains a lithium-supplementing additive, the amount of gas generated will also increase during the first charging process.

In order to solve the above problem, in a first aspect, the present application provides a cathode lithium-supplementing additive. The cathode lithium-supplementing additive of the present application has a core-shell structure shown in FIG.1, including a core 01 and a coating layer 02 coating the core 01.

The core 01 includes a cathode lithium-supplementing material. In this manner, the core 01 is rich in lithium, thereby ensuring that the cathode lithium-supplementing additive of the embodiment of the present application can provide abundant lithium. After being added to the cathode as a cathode lithium-supplementing additive, it acts as a "sacrificial agent" during the first charging cycle, and releases almost all lithium ions contained in the cathode lithium-supplementing additive at one time to replenish the irreversible lithium ions consumed by the formation of the SEI film on the anode, thereby improving the initial coulombic efficiency of the lithium-ion battery.

The cathode lithium-supplementing additive in the core 01 can be a conventional cathode lithium-supplementing material, a modified cathode lithium-supplementing material based on a conventional cathode lithium-supplementing material, or of course a newly developed cathode lithium-supplementing material. In the embodiment of the present application, combined with the characteristics of the coating layer 02 described below, the cathode lithium-supplementing material in the core 01 is a cathode lithium-supplementing material that is relatively easy to generate gas, such as a cathode lithium-supplementing material containing oxygen atoms.

As in the embodiment, the cathode lithium-supplementing material containing oxygen atoms may include at least one of $L_xM_yN_zO_q$ and $Li_wO$, where L in the molecular formula of $L_xM_yN_zO_q$ is an alkali metal element of Li or/and a mixture of Li and at least one of K and Na not exceeding 30%; M includes at least one of Fe, Co, Ni, Mn, V, Fe-Co, Cu, Mo, Al, Ti, and Mg; N includes at least one of Fe, Co, Mn, Ni, Si, Al or other equivalent or heterovalent metal elements; O is oxygen; x is 4-6, y is 0.7-1.0, z is 0-0.3, and q is 4-5. Therefore, according to the element of M, the lithium-supplementing material may be at least one of an iron-based lithium-supplementing material, a manganese-based lithium-supplementing material, a nickel-based lithium-supplementing material, and so on. When z is zero, $L_xM_yN_zO_q$ may be a doped or non-doped cathode lithium-supplementing material. In a specific embodiment, M in $L_xM_yN_zO_q$ is Fe while N is Al. Here, the lithium-rich lithium-supplementing material represented by $L_xM_yN_zO_q$ may be $Li_5Fe_{0.98}Al_{0.02}O_4$. It may also be, but not limited to, $Li_2NiO_2$, $Li_5FeO_4$, $LiCoO_2$, $Li_2MnO_2$, $LiMn_2O_4$, $LiFePO_4$, etc. O in $Li_wO$ is an oxygen element; w is 1.5-3.5. These lithium-supplementing materials are rich in lithium and can release lithium ions during the first charging cycle to effectively supplement lithium. When the lithium-supplementing material has an antifluorite structure, it can also improve the unidirectional capacity characteristics of the lithium-supplementing material, thereby ensuring the lithium-supplementing effect of the cathode lithium-supplementing additive of the present application. When the lithium-supplementing material contains aluminum-doping, Al atoms exist in the form of replacing iron atom lattices. Al atoms in this form can broaden the transmission channel of lithium ions and increase the deintercalation rate of lithium ions. Apparently, the core 01 may contain other lithium-supplementing materials in addition to the cathode lithium-supplementing additive containing oxygen atoms. More importantly, these cathode lithium-supplementing materials containing oxygen atoms, on the basis of fully exerting their lithium-supplementing effect, can effectively inhibit the generation of active oxygen in the lithium-supplementing material when combined with the coating layer 02 described below, thereby further effectively inhibiting the gas generation and further improving the lithium-supplementing effect of the cathode lithium-supplementing additive.

In the embodiment, the core 01 may be at least one of a primary particle and a secondary particle, specifically at least one of a primary particle and a secondary particle formed by the cathode lithium-supplementing additive contained in the core 01. For example, when the core 01 is a primary particle, the particle size of the primary particle, namely the particle size distribution of the core 01, is 0.01 μm-5.0 μm; when the core 01 is a secondary particle, the particle size of the secondary particle, namely the particle size distribution of the core 01, is 0.02 μm-20 μm. The secondary particle refers to an agglomerated particle formed by the aggregation of more than one primary particle. By controlling the morphology and particle size of the core 01, the overall particle size of the cathode lithium-supplementing additive in the embodiment of the present application can be controlled and the lithium-supplementing effect of the cathode lithium-supplementing additive can be adjusted.

The coating layer 02 contained in the cathode lithium-supplementing additive of the embodiment of the present application contains a polymer having a molecular structure represented by the following general formula I:

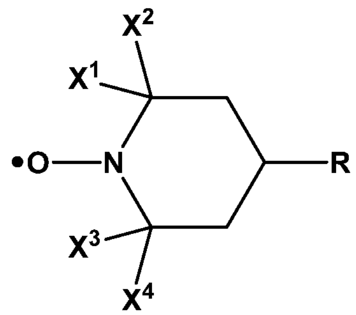

I ;

where, in the general formula I, $X_1$, $X_2$, $X_3$, and $X_4$ are independently any one of a hydrogen atom and an alkyl group having 1 to 3 carbon atoms, and R is a polymer segment. Since the coating layer 02 of the cathode lithium-supplementing additive of the embodiment of the present application contains the polymer represented by the general formula I, the coating layer 02 is enabled to effectively inhibit the generation of active oxygen, thereby effectively inhibiting the gas generation phenomenon and improving the lithium supplement effect of the cathode lithium-supplementing additive.

Since lithium-ion batteries are prone to generate harmful free radicals during the charging and discharging process, such as $CH_3\cdot$ free radicals, acyl free radicals, and $CH_3O\cdot$ free radicals, the presence of the polymer of general formula I can effectively inhibit the generation of free radicals during the charging and discharging process of lithium-ion batteries, and can effectively capture the free radicals generated during the charging and discharging process of lithium-ion batteries to form stabilized products. For example, the RN-O· free radical contained in the polymer of general formula I is coupled with a $CH_3\cdot$ free radical, an acyl free radical, and a $CH_3O\cdot$ free radical to form relatively stable chemical bonds and consume the $CH_3\cdot$ free radical, the acyl free radical, and the $CH_3O\cdot$ free radical. Therefore, the above polymer of general formula I enables the coating layer 02 to inhibit active oxygen and capture the free radicals generated by the charge and discharge of lithium-ion batteries, so that the gas generation in the lithium-ion batteries during the charging and

discharging process is significantly reduced, and the volume expansion of lithium-ion batteries is decreased, thereby effectively improving the stability and safety of the charge and discharge of lithium-ion batteries and improving the lithium supplement effect therein.

In the embodiment, a mass content of the polymer represented by the general formula I in the cathode lithium-supplementing additive of the present application is 0.1 %-5%, and, specifically, may be a typical but non-limiting content of 0.1%, 0.5%, 1%, 1.5%, 2%, 2.5%, 3%, 3.5%, 4%, 4.5%, 5%, etc. By increasing the content of the polymer in the cathode lithium-supplementing additive of the embodiment of the present application, the function of the polymer can be fully exerted, such as improving the ability of the coating layer 02 to inhibit active oxygen and capture the free radicals generated by the charging and discharging of the lithium-ion battery, so that the gas generation of the lithium-ion battery during the charging and discharging process is significantly reduced, and the volume expansion of the lithium-ion battery is decreased.

$X_1$, $X_2$, $X_3$, and $X_4$ contained in the polymer represented by the general formula I can play a role in stabilizing the nitroxide free radical in the polymer represented by the general formula I through steric hindrance effect. In the embodiment, when $X_1$, $X_2$, $X_3$, and $X_4$ are independently an alkyl group having 1 to 3 carbon atoms, the alkyl group may be any one of a methyl group, an ethyl group, a propyl group, an isopropyl group, and the like. These groups can enhance the steric hindrance effect and further enhance the stability of the nitroxide free radical.

In a specific embodiment, the piperidine group in general formula I, specifically the piperidine group substituted with $X_1$, $X_2$, $X_3$, and $X_4$ and a nitroxyl radical, may be a branch or a terminal group, which can play the above-mentioned role of the above-mentioned polymer.

The polymer segment R in the polymer of general formula I can form a film and improve the adhesion between the coating layer 02 and the core 01. In the embodiment, the polymer segment R may be at least one of a carbon chain polymer (a carbon chain polymer refers to the main chain of a molecular containing only carbon atoms), a heterochain polymer (a heterochain polymer refers to the main chain of a molecular containing carbon and other atoms (such as O, N, and S, etc.)), and a non-carbon chain polymer (a non-carbon chain polymer refers to the main chain of a molecular containing no carbon atoms). In a further embodiment, the polymer segment R may be at least one of a polyolefin segment, a polyacrylate segment, a polymethacrylate segment, a polyester segment, a polyamide segment, a polyurethane segment, a polyether segment, a polysilane segment, and a polysiloxane segment. These polymer segments can further improve the film-forming properties of the polymer represented by general formula I.

Based on the types of groups represented by $X_1$, $X_2$, $X_3$, $X_4$, and R in the above general formula I, in specific embodiments, the polymer represented by the general formula I in the above embodiments may be at least a polymer represented by the following molecular structural formulas $I_1$ to $I_6$:

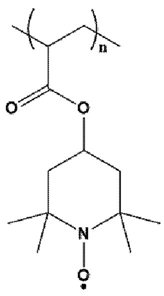
$I_1$

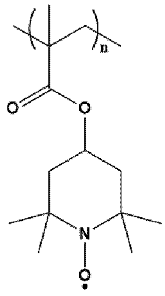
$I_2$

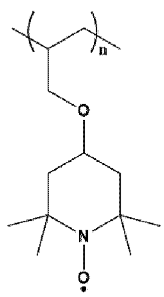
$I_3$

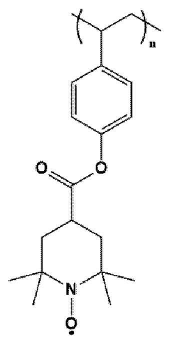
$I_4$

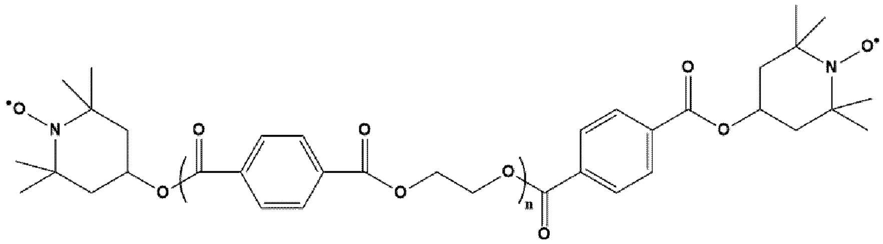

$I_5$

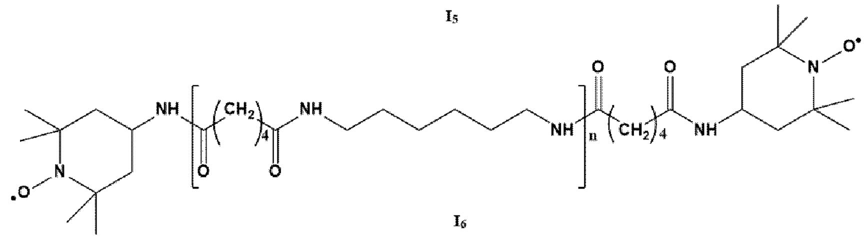

$I_6$

R in $I_1$ includes a polyacrylate segment; R in $I_2$ includes a polymethacrylate segment; R in $I_3$ includes a polyallyloxy segment; R in $I_4$ includes a polystyrene segment; R in $I_5$ includes a polyester segment; R in $I_6$ includes a polyamide segment. Moreover, n in the polymer structures shown in $I_1$ to $I_6$ is the degree of polymerization of each polymer, and the value of n may be a common degree of polymerization value of the polymer, and the value of n can be adjusted according to practical performance requirements.

They can all play the above-mentioned role of the polymer, inhibiting active oxygen and capturing free radicals generated by the charging and discharging of the lithium-ion battery, so that the gas generation in the lithium-ion battery during charging and discharging is significantly reduced, and the volume expansion of the lithium-ion battery is decreased.

In addition, the polymer represented by the above general formula I can be prepared according to existing preparation methods (such as free radical polymerization, condensation polymerization, esterification reaction, and the like). For example, in the embodiments, the preparation method includes: obtaining polymer segments by free radical polymerization or condensation polymerization using monomers; and carrying out esterification or amidation reaction using the polymer segments and small molecules containing piperidine groups and connecting the piperidine structure to the polymer segments to obtain the polymer represented by general formula I in each embodiment.

Based on the above embodiments, the coating layer 02 includes a polymer coating layer, and the polymer coating layer includes the polymer shown in the above general formula I, for example, a polymer coating layer may be formed by the polymer shown in the above general formula I alone, or a polymer coating layer may be formed by a mixture of other polymers and the polymer shown in the above general formula I, or a composite polymer coating layer may be formed by a first polymer coating layer containing the polymer shown in the above general formula I alone and a second polymer coating layer containing other polymers. The polymer shown in the above general formula I is dispersed in the polymer coating layer or forms a polymer coating layer to coat the core 01, thereby improving the effect of the above coating layer 02 in inhibiting active oxygen and capturing free radicals generated by charging and discharging of the lithium-ion battery.

On the basis that the coating layer 02 contained in the cathode lithium-supplementing additive of the embodiment of the present application contains the above-mentioned polymer coating layer, in a further embodiment, the coating layer 02 contained in the cathode lithium-supplementing additive of the embodiment of the present application further includes a hydrophobic encapsulation layer. As shown in FIG. 2, the hydrophobic encapsulation layer 21 contained in the coating layer 02 is coated on the core 01, and the polymer coating layer 22 is coated on a surface of the hydrophobic encapsulation layer 21 away from the core 01. The hydrophobic encapsulation layer 21 is added to the coating layer 02, so that the coating layer 02 can function as an isolation layer in addition to the functions of the polymer shown in general formula I above, and protect the cathode lithium-supplementing material contained in the core 01 from the storage environment, such as avoiding contact with adverse factors such as water vapor and carbon dioxide in the environment, thereby improving the lithium supplement stability of the cathode lithium-supplementing material, enabling the core 01 to have high lithium supplement stability and lithium supplement effect, and improving the storage performance and processibility of the cathode lithium-supplementing additive of the embodiment of the present application. Based on the role of the hydrophobic encapsulation layer 21, the material of the hydrophobic encapsulation layer 21 may be a material that can form a dense hydrophobic coating layer and effectively ensure the stability of the cathode lithium-supplementing material contained in the core 01. For example, the material of the hydrophobic encapsulation layer 21 may also be an ionic conductor encapsulation layer that facilitates ion conduction, or it may be an electronic conductor encapsulation layer that facilitates electronic conductivity. Obviously, it may also be a composite layer structure of an ionic conductor encapsulation layer and an electronic conductor encapsulation layer. When the hydrophobic encapsulation layer 21 is a composite layer structure of an ionic conductor encapsulation layer and an electronic conductor encapsulation layer, any layer of the ionic

conductor encapsulation layer or the electronic conductor encapsulation layer may be directly coated on the surface of the above granular lithium-supplementing material with lithium fluoride bound on the surface. The ionic conductor encapsulation layer can improve intercalation and deintercalation effect of lithium ions in the lithium-supplementing material and the ionic conductivity of the lithium ions. The electronic conductor encapsulation layer can improve the electronic conductivity and conduction performances of the lithium-supplementing material, stimulate the specific capacity of the cathode lithium-supplementing additive, and achieve truly efficient lithium supplementation.

When the hydrophobic encapsulation layer 21 includes an ionic conductor encapsulation layer, the conductivity of lithium ions is improved. Therefore, the material of the ionic conductor encapsulation layer may be a material that is conducive to improving ion conductivity, such as but not limited to at least one of a perovskite-type ionic conductive material, a NASICON-type ionic conductive material, and a garnet-type ionic conductive material. In a specific embodiment, the perovskite type includes $Li_{3x}La_{2/3-x}TiO_3$ (LLTO), such as at least one of $Li_{0.5}La_{0.5}TiO_3$, $Li_{0.33}La_{0.57}TiO_3$, $Li_{0.29}La_{0.57}TiO_3$, $Li_{0.33}Ba_{0.25}La_{0.39}TiO_3$, $(Li_{0.33}La_{0.56})_{1.005}Ti_{0.99}Al_{0.01}O_3$, $Li_{0.5}La_{0.5}Ti_{0.95}Zr_{0.05}O_3$, and the like. The NASICON type may be, but not limited to, $Li_{1.4}Al_{0.4}Ti_{1.6}(PO_4)_3$ (LATP). The garnet type includes at least one of $Li_7La_3Zr_2O_{12}$ (LLZO), $Li_{6.4}La_3Zr_{1.4}Ta_{0.6}O_{12}$, and $Li_{6.5}La_3Zr_{1.5}Ta_{0.5}O_{12}$. By selecting the material of the ionic conductor encapsulation layer, the ion conductivity of the ionic conductor encapsulation layer can be further improved.

When the hydrophobic encapsulation layer 21 includes an electronic conductor encapsulation layer, the electronic conductor encapsulation layer can enhance the electronic conductivity of the hydrophobic encapsulation layer, thereby enhancing the electronic conductivity of the cathode lithium-supplementing additive, which is beneficial to reduce the impedance within the electrode. Moreover, during the release of the above-mentioned granular lithium-supplementing material as a "sacrificial agent" and after the release, the electronic conductor encapsulation layer can also be re-exploited as a conductive agent inside the cathode. Moreover, the electronic conductor encapsulation layer or further with the ionic conductor encapsulation layer has an additional effect of densification, which improves the density of the hydrophobic encapsulation layer, thereby improving the lithium supplement stability and lithium supplement effect of the cathode lithium-supplementing additive. Based on the role of the electronic conductor encapsulation layer, the electronic conductor encapsulation layer may be fully coated or partially coated. In the embodiment, the material of the electronic conductor encapsulation layer includes at least one of a carbon material, a conductive oxide, and a conductive organic matter. In a specific embodiment, when the material of the electronic conductor encapsulation layer is a carbon material, the carbon material includes at least one of amorphous carbon, carbon nanotubes, graphite, carbon black, graphene, and the like. In other specific embodiments, when the material of the electronic conductor encapsulation layer is a conductive oxide, the conductive oxide may include at least one of $In_2O_3$, ZnO, and $SnO_2$. The conductive organic matter may be a conductive polymer and the like. By adjusting the content and material of the electronic conductor encapsulation layer, the electronic conductivity can be further improved.

In a further embodiment, the thickness of the hydrophobic encapsulation layer 21 as shown in FIG. 2 may be 1-100 μm. nm. For example, the thickness can be adjusted by controlling the thickness of the ionic conductor encapsulation layer and the electronic conductor encapsulation layer contained in the hydrophobic encapsulation layer. by controlling the thickness of the hydrophobic encapsulation layer within this range, the compactness of the hydrophobic encapsulation layer can be improved, which further enhances the storage stability and processing stability of the cathode lithium-supplementing additive and improves the ionic and/or electronic conductivity of the cathode lithium-supplementing additive.

In addition, the hydrophobic encapsulation layer may further include other functional layers as needed, and the types of other functional layers may be flexibly selected as required.

In a further embodiment, the hydrophobic encapsulation layer 21 further contains the polymer with the molecular structure shown in the above general formula I. By further adding the polymer to the hydrophobic encapsulation layer 21, the polymer and the hydrophobic encapsulation layer 21 can isolate moisture, such as enhancing the isolation from water vapor in the production and processing environment, improving the storage and processing performance of the cathode lithium-supplementing additive, further reducing the gas generation in the battery and improving the safety performance.

In a second aspect, the present application also provides a preparation method for the above cathode lithium-supplementing additive. The preparation method for the cathode lithium-supplementing additive in the present application embodiment includes the following steps S01-S02.

In S01: a raw material of particles of the cathode lithium-supplementing material is mixed with a solution including a polymer with a molecular structure represented by the above general formula I to form a mixed material; and

in S02: in a protective atmosphere, the mixture is dried so that the polymer is dispersed on the surface of the particles of the cathode lithium-supplementing material to obtain a cathode lithium-supplementing additive.

The raw material of the particles of the cathode lithium-supplementing material in step S01 is the core 01 material containing the cathode lithium-supplementing material that forms the cathode lithium-supplementing additive in the above

embodiment of the present application. The type and particle size of the raw material of the particles of the cathode lithium-supplementing material are the same as the cathode lithium-supplementing material contained in the core 01 of the cathode lithium-supplementing additive in the above embodiment of the present application. The polymer shown in general formula I is also the polymer with the molecular structure shown in general formula I contained in the coating layer 02 of the above cathode lithium-supplementing additive. Therefore, the raw material of the particles of the cathode lithium-supplementing material will not be described in detail here for brevity.

In the embodiment, when the coating layer 02 contained in the cathode lithium-supplementing additive contains the hydrophobic encapsulation layer 21 as shown in FIG. 2, the raw material of the particles of the cathode lithium-supplementing material in step S01 includes the core 01 contained in the cathode lithium-supplementing additive in the above embodiment of the present application and the hydrophobic encapsulation layer 21 covering the core 01. In a specific embodiment, the hydrophobic encapsulation layer 21 may be the ionic conductor encapsulation layer or the electronic conductor encapsulation layer as described above or a composite layer containing the ionic conductor encapsulation layer and the electronic conductor encapsulation layer. In addition, the method for forming the hydrophobic encapsulation layer may be a corresponding or suitable method according to the structure and material of the hydrophobic encapsulation layer 21.

In step S01, after the raw material of the particles of the cathode lithium-supplementing material and the solution containing the polymer shown in general formula I are mixed, the solution and the raw material of the particles of the cathode lithium-supplementing material are mixed evenly, so that the solution containing the polymer shown in general formula I can form a film layer on the surface of the raw material of the particles of the cathode lithium-supplementing material, and the polymer shown in general formula I can be at least dispersed on the surface of the particles of the cathode lithium-supplementing material. Therefore, any mixing method that can evenly mix the raw material of the particles of the cathode lithium-supplementing material and the solution is within the scope disclosed in the embodiment of this application, such as but not limited to mixing treatment such as stirring or ball milling.

In the embodiment, the mixing ratio of the raw material of the particles of the cathode lithium-supplementing material and the solution can ensure that the content of the polymer of general formula I in the cathode lithium-supplementing additive prepared in step S02 is 0.1%-5%. In a further embodiment, by controlling the mixing ratio of the raw material of the particles of the cathode lithium-supplementing material and the solution, the polymer of general formula I forms a polymer coating layer on the surface of the raw material of the particles of the cathode lithium-supplementing material, that is, the surface of the cathode lithium-supplementing additive prepared in step S02 is formed with a polymer coating layer of the polymer represented by general formula I.

In a further embodiment, the mass concentration of the polymer represented by general formula I contained in the solution in step S01 may be 2%-20%. By controlling the concentration of the polymer represented by general formula I in the solution, the integrity and uniformity of the wet film formed by the solution on the surface of the raw material of the particles of the cathode lithium-supplementing material can be improved, such as forming a complete and uniform wet film. The solvent contained in the solution may be a solvent that can disperse the raw material of the particles of the cathode lithium-supplementing material and the polymer represented by general formula I and ensure their stability, such as at least one organic solvent of methanol, ethanol, n-hexane, cyclohexane, ethyl acetate, toluene, xylene, tetrahydrofuran, N-methylpyrrolidone, N,N-dimethylformamide, and the like.

The drying treatment in step S02 is to remove the solvent contained in the wet film in step S01. Therefore, on the basis of ensuring the stability of the raw material of the particles of the cathode lithium-supplementing material and the polymer represented by general formula I, any drying treatment is within the scope disclosed in the embodiment of the present application, such as drying by heating, drying under reduced pressure or natural drying.

In the embodiment, the protective atmosphere is formed by continuously introducing a chemically inert gas. In a specific embodiment, the chemically inert gas may be a conventional chemically inert gas, such as at least one of Ar, $N_2$, He, and the like.

Therefore, the above preparation method for the cathode lithium-supplementing additive can effectively disperse the polymer of general formula I on the surface of the particles of the cathode lithium-supplementing material, so that the prepared cathode lithium-supplementing additive has the structural characteristics and corresponding electrochemical properties of the cathode lithium-supplementing additive in the above embodiments of the present application. For example, the prepared cathode lithium-supplementing additive the cathode lithium-supplementing additive has lithium supplement effect as that in the above-mentioned cathode lithium-supplementing additive of the present application, additionally it has the function of inhibiting active oxygen and capturing the free radicals generated in the charging and discharging of the lithium-ion battery, so that the gas generation of the lithium-ion battery during charging and discharging process is significantly reduced. In addition, the preparation method for the cathode lithium-supplementing additive can ensure that the structure and electrochemical properties of the prepared cathode lithium-supplementing additive are stable, and the efficiency is high, reducing the production costs.

In a third aspect, an embodiment of the present application also provides a cathode plate. The cathode plate of the embodiment of the present application includes a cathode current collector and a cathode active layer bonded to the

surface of the cathode current collector. The cathode active layer contains the cathode lithium-supplementing additive of the above-mentioned embodiment of the present application. Since the cathode plate of the embodiment of the present application contains the above-mentioned electrode cathode lithium-supplementing additive of the embodiment of the present application, during the charging and discharging process, the cathode lithium-supplementing additive contained in the cathode plate has the above-mentioned functions, and can be used as a lithium source that is consumed as a "sacrificial agent" in the first cycle of charging process, so as to replenish the irreversible lithium ions consumed by formation of the SEI film on the anode, thereby maintaining the abundance of lithium ions in the lithium-ion battery system and improving the initial efficiency and overall electrochemical performance of the lithium-ion battery. Moreover, the electrode plate has stable quality and a high yield rate. Moreover, it can also effectively capture and consume harmful groups generated by lithium-ion batteries during the charging and discharging process, and effectively reduce the gas generation phenomenon of the lithium-ion battery during the charging and discharging process, thereby effectively improving the stability and safety of charging and discharging of the lithium-ion battery.

In one embodiment, the mass content of the cathode lithium-supplementing additive in the above-mentioned embodiment of the present application in the cathode active layer may be 0.1 wt%-10 wt%; and preferably, 0.5 wt%-5 wt%. The cathode active layer includes, in addition to the cathode lithium-supplementing additive, a cathode active material, a binder and a conductive agent. The binder may be a conventional electrode binder, such as one or more of polyvinylidene chloride, soluble polytetrafluoroethylene, styrenebutadiene rubber, hydroxypropyl methylcellulose, methylcellulose, carboxymethyl cellulose, polyvinyl alcohol, acrylonitrile copolymer, sodium alginate, and chitosan and derivatives thereof. In the embodiment of the present application, the conductive agent may be a conventional conductive agent, such as one or more of graphite, carbon black, acetylene black, graphene, carbon fiber, C60, and carbon nanotubes. The cathode active material may be one or more of lithium cobaltate, lithium manganate, lithium iron phosphate, lithium manganese iron phosphate, lithium vanadium phosphate, lithium vanadium oxyphosphate, lithium vanadium fluorophosphate, lithium titanate, lithium nickel cobalt manganate, and lithium nickel cobalt aluminum.

In the embodiment, the preparation process of the cathode plate may be as follows: the cathode active material, the cathode lithium-supplementing additive, the conductive agent and the binder are mixed to obtain an electrode slurry, the cathode slurry is coated on the cathode current collector, and the cathode plate is prepared through the steps of drying, rolling, die cutting, and so on.

In a fourth aspect, the present application also provides a secondary battery. The secondary battery of the present application includes necessary components such as a cathode plate, an anode plate, a separator and an electrolyte, as well as other necessary or auxiliary components. The cathode plate is the cathode plate of the above embodiment of the present application.

Since the secondary battery of the embodiment of the present application contains the cathode lithium-supplementing additive of the above embodiment of the present application, the secondary battery of the embodiment of the present application produces little gas during the cycles, thereby effectively reducing or avoiding phenomena such as volume expansion and the like. It has high cycle performance, thus having high safety performance, long service life, and high initial coulombic efficiency and lithium-ion battery capacity, and stable electrochemical performance. As tested, the capacity retention rate of the secondary battery can still be higher than 87% after 300 cycles at room temperature, and further higher than 91%. Cycling at high temperature, such as at 45°C, after 300 cycles, the capacity retention rate can still be higher than 80%, and further higher than 85%. At this time, the thickness change rate of the battery is less than 15%, and further less than 9%. The battery has excellent cycle performance and high safety.

The cathode lithium-supplementing additive and preparation method and application thereof in the embodiments of the present application are demonstrated below through various specific embodiments.

**1. Examples of cathode lithium-supplementing additive and preparation method therefor:**

**Examples A1 to A6**

The present Examples A1 to A6 respectively provide cathode lithium-supplementing additives, and the components contained in each cathode lithium-supplementing additive are shown in Table 1 below. Specifically, the cathode lithium-supplementing additive of Example A1 contains a coating layer formed by a polymer represented by structural formula $I_1$, and Example A2 contains a coating layer formed by a polymer represented by structural formula $I_2$, and so on. Here, the contents of each component in the cathode lithium-supplementing additive are respectively shown in Table 1.

The preparation method for the cathode lithium-supplementing additive in each example includes the following steps S1 to S2:

In step S1: a raw material of particles of the cathode lithium-supplementing material ($Li_5FeO_4$) was respectively mixed with a solution including polymers represented by general formula $I_1$ to $I_6$ to form a mixed material; and

in step S2: the mixture was dried in a protective atmosphere so that the polymer was dispersed on the surface of the particles of the cathode lithium-supplementing material to obtain a cathode lithium-supplementing additive.

**Comparative Example A1**

Comparative Example A1 provides a cathode lithium-supplementing additive. Compared with the cathode lithium-supplementing additive in Example A1, the cathode lithium-supplementing additive in this comparative example is different in that the raw material of particles of the cathode lithium-supplementing material ($Li_5FeO_4$) was not mixed with the polymers represented by the general formula $I_1$ to $I_6$.

Table 1 Composition of cathode lithium-supplementing additives in various examples and comparative example

| Components / Group | Particles of the cathode lithium-supplementing material | Polymer coating layer |
|---|---|---|
| Example A1 | 98 wt% $Li_5FeO_4$ | 2 wt% Polymer $I_1$ |
| Example A2 | 98 wt% $Li_5FeO_4$ | 2 wt% Polymer $I_2$ |
| Example A3 | 98 wt% $Li_5FeO_4$ | 2 wt% Polymer $I_3$ |
| Example A4 | 98 wt% $Li_5FeO_4$ | 2 wt% Polymer $I_4$ |
| Example A5 | 98 wt% $Li_5FeO_4$ | 2 wt% Polymer $I_5$ |
| Example A6 | 98 wt% $Li_5FeO_4$ | 2 wt% Polymer $I_6$ |
| Comparative Example A1 | 98 wt% $Li_5FeO_4$ | — |

**2. Examples of lithium-ion batteries:**

The present Examples B1 to B6 and Comparative Example B1 each provided a lithium-ion battery. Each lithium-ion battery was assembled into a lithium-ion battery according to the following method:

1) Cathode plate:
The cathode lithium-supplementing additives provided in Examples A1 to A6 and Comparative Example A1 were respectively used as the cathode lithium-supplementing additive for the lithium-ion batteries in Examples B1 to B6 and Comparative Example B1. Under the same conditions, NMP: $LiFePO_4$: cathode lithium-supplementing additive: Super P: PVDF were mixed in a mass ratio of 100:93:2:2:3, the mixing was carried out by ball milling, and the ball milling time was 60 min; the rotation speed was set to 30 Hz; after homogenization-coating-drying-cutting operations, cathode plates were prepared, and the cathode plates were baked in a vacuum oven at 100°C to remove trace water.

2) Anode plate: an anode active material graphite, a conductive agent of Super P, a thickener of carboxymethyl cellulose (CMC), and a binder of styrene butadiene rubber (SBR) were evenly mixed in deionized water to form an anode slurry, the mass ratio of graphite: Super P: CMC: SBR was 95:2:0.5:2.5. The anode slurry was coated on a current collector of copper foil, and after drying-rolling-secondary drying process, the anode plate was made.

3) Separator: polyethylene (PE) separator.

4) Electrolyte: the electrolyte was a $LiPF_6$ solution at 1 mol/L, and the solvent was composed of EC (ethylene carbonate) and DEC (diethyl carbonate) in a volume ratio of 1:1.

5) Assembly of secondary batteries:
The cathode plate, anode plate, electrolyte and separator were assembled into a lithium-ion soft-pack battery according to the lithium-ion battery assembly requirements.

**3. Related performance tests of lithium-ion batteries:**

The lithium-ion batteries of the examples and comparative examples assembled in Section 5) were subjected to the following performance tests:

Room-temperature cycle test: the batteries were placed at 25°C and charged and discharged at a current of 1 C in a charge and discharge voltage range of 3.0-4.4 V. The initial thickness was recorded as $T_0$ and the initial capacity was recorded as $Q_0$. The thickness after 300 cycles was recorded as $T_1$ and the capacity was recorded as $Q_1$. The thickness change rate and capacity retention rate of the battery after 300 cycles at room temperature were calculated by the following formula:

$$\text{Thickness change rate after 300 cycles at room temperature (\%)} = (T_1-T_0)/T_0 \times 100\%;$$

$$\text{Capacity retention rate after 300 cycles at room temperature (\%)} = Q_1/Q_0 \times 100\%$$

High-temperature cycle test: at a high temperature of 45°C, charge and discharge cycles were performed using a 1 C current in a charge and discharge voltage range of 3.0-4.4 V. The initial thickness was recorded as $T_2$ and the initial capacity was recorded as $Q_2$. The thickness after 300 cycles was recorded as $T_3$ and the capacity was recorded as $Q_3$. The thickness change rate and capacity retention rate of the battery after 300 cycles at high temperature (45°C) were calculated by the following formula:

$$\text{Thickness change rate after 300 cycles at high temperature (45°C) (\%)} = (T_3-T_2)/T_2 \times 100\%;$$

$$\text{Capacity retention rate after 300 cycles at high temperature (45°C) (\%)} = Q_3/Q_2 \times 100\%.$$

The relevant performance test results are shown in Table 2 below:

Table 2 Performance test results

| Group \ Item | Thickness change rate after 300 cycles at room temperature (%) | Capacity retention rate after 300 cycles at room temperature (%) | Thickness change rate after 300 cycles at high temperature (45°C) (%) | Capacity retention rate after 300 cycles at high temperature (45°C) (%) |
|---|---|---|---|---|
| Example B1 | 4.32 | 92.27 | 8.64 | 87.37 |
| Example B2 | 4.48 | 92.65 | 8.01 | 87.52 |
| Example B3 | 3.96 | 93.19 | 8.98 | 88.65 |
| Example B4 | 4.89 | 92.68 | 8.45 | 87.33 |
| Example B5 | 5.64 | 91.53 | 9.21 | 86.16 |
| Example B6 | 5.77 | 91.48 | 9.63 | 85.83 |
| Comparative Example B1 | 10.37 | 85.43 | 18.73 | 78.36 |

From the test results in Table 2, it can be seen that in the lithium-ion batteries prepared in Examples B1 to B6, by using the polymers with structural formulas $I_1$ to $I_6$ as the lithium-supplementing additives for the coating layer, the thickness change rate of the lithium-ion batteries at room temperature is significantly less than that of the comparative example B1 without the polymer coating layer, indicating that the gas generation is significantly reduced, and the capacity retention rates after 300 cycles in the examples are significantly higher than that of the comparative example, additionally, a similar pattern is observed after 300 cycles at high temperature (45%). In summary, the use of the electrolyte additive of the present application can inhibit the gas generation in the lithium-ion batteries during the charging and discharging process, and the batteries have good cycle performance, thereby having high safety performance and long service life.

The above embodiments only show several implementation methods of the present application, and the descriptions thereof are relatively specific and detailed, but they cannot be construed as limiting the scope of the present application. It should be pointed out that, for a person of ordinary skill in the art, several modifications and improvements can be made without departing from the concept of the present application, and these all belong to the scope of protection of the present application. Therefore, the protection scope of the present application shall be defied by the appended claims.

## Claims

1. A cathode lithium-supplementing additive, having a core-shell structure, a core of the core-shell structure comprising a cathode lithium-supplementing material, wherein a coating layer covering the core contains a polymer having a molecular structure represented by general formula I:

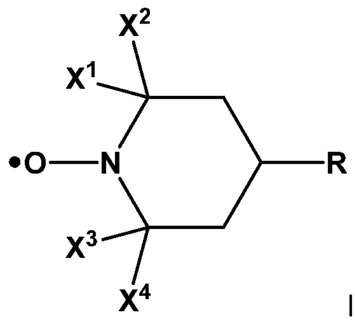

I;

wherein, in the general formula I, $X_1$, $X_2$, $X_3$, and $X_4$ are independently any one of a hydrogen atom and an alkyl group having 1 to 3 carbon atoms, and R is a polymer segment.

2. The cathode lithium-supplementing additive as claimed in claim 1, wherein: the alkyl group comprises any one of a methyl group, an ethyl group, a propyl group, and an isopropyl group; and/or

   the polymer segment comprises at least one chain segment of a carbon chain polymer, a heterochain polymer, and a non-carbon chain polymer; and/or the piperidine group contained in the general formula I is a branch or a terminal group; and/or
   a mass content of the polymer in the cathode lithium-supplementing additive is 0.1%-5%.

3. The cathode lithium-supplementing additive as claimed in claim 1 or 2, wherein:

   the R comprises one or more of a polyolefin segment, a polyacrylate segment, a polymethacrylate segment, a polyester segment, a polyamide segment, a polyurethane segment, a polyether segment, a polysilane segment, and a polysiloxane segment.

4. The cathode lithium-supplementing additive as claimed in any one of claims 1 to 3, wherein: the $X_1$, $X_2$, $X_3$, and $X_4$ are all a methyl group, and the R is one or more of a polyolefin segment, a polyacrylate segment, a polymethacrylate segment, a polyester segment, a polyamide segment, a polyurethane segment, a polyether segment, a polysilane segment, and a polysiloxane segment.

5. The cathode lithium-supplementing additive as claimed in any one of claims 1 to 4, wherein the polymer comprises one or more of the following molecular formulas $I_1$ to $I_6$:

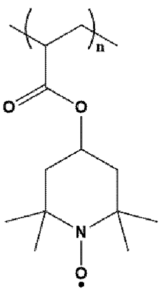

$I_1$

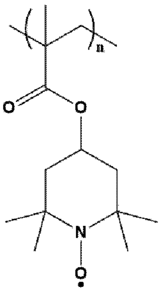

$I_2$

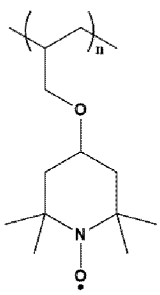

$I_3$

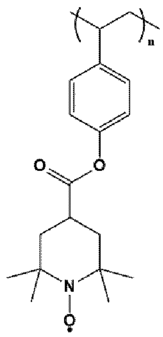

$I_4$

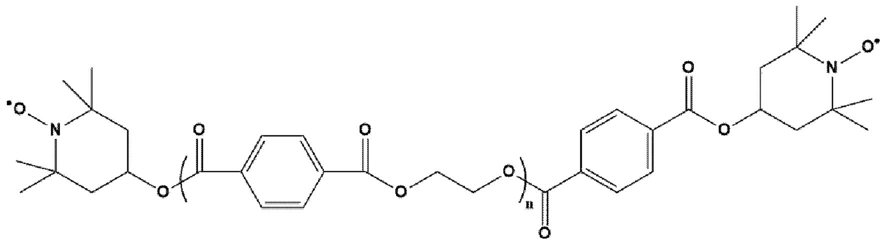

$I_5$

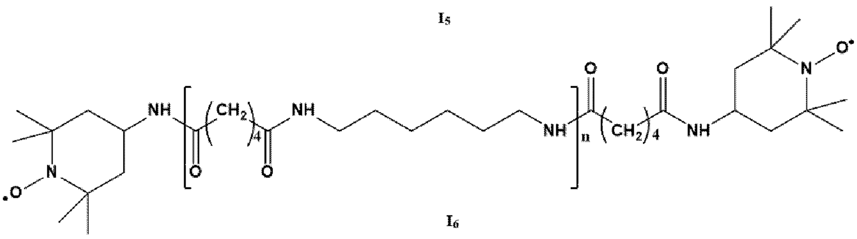

$I_6$

6. The cathode lithium-supplementing additive as claimed in any one of claims 1 to 5, wherein: the coating layer comprises a polymer coating layer, and a polymer contained in the polymer coating layer comprises the polymer; and/or the cathode lithium-supplementing material comprises a cathode lithium-supplementing material containing an oxygen atom.

7. The cathode lithium-supplementing additive as claimed in claim 6, wherein: the coating layer further comprises a hydrophobic encapsulation layer, and the hydrophobic encapsulation layer is coated on the core, and the polymer coating layer is coated on a surface of the hydrophobic encapsulation layer away from the core.

8. The cathode lithium-supplementing additive as claimed in claim 7, wherein: the hydrophobic encapsulation layer comprises at least one of an ionic conductor encapsulation layer and an electronic conductor encapsulation layer; and/or

   the hydrophobic encapsulation layer contains a polymer having the molecular structure represented by the general formula I; and/or
   a thickness of the hydrophobic encapsulation layer is 1-100 nm.

9. The cathode lithium-supplementing additive as claimed in claim 8, wherein: a material of the ionic conductor encapsulation layer comprises at least one of a perovskite-type ionic conductive material, a NASICON-type ionic conductive material, and a garnet-type ionic conductive material; and
   a material of the electronic conductor encapsulation layer comprises at least one of a carbon material, a conductive oxide, and a conductive organic material.

10. A preparation method for a cathode lithium-supplementing additive, comprising steps of:

   mixing a raw material of particles of a cathode lithium-supplementing material with a solution of a polymer having a molecular structure represented by general formula I below to form a mixture; and
   drying the mixture in a protective atmosphere so that the polymer is dispersed on surfaces of the particles of the

cathode lithium-supplementing material to obtain a cathode lithium-supplementing additive;

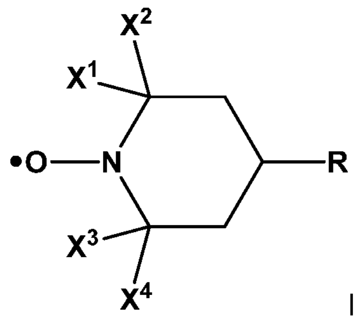

I;

wherein, $X_1$, $X_2$, $X_3$, and Xa in the general formula I are independently any one of a hydrogen atom and an alkyl group having 1 to 3 carbon atoms, and R is a polymer segment.

**11.** The preparation method as claimed in claim 10, wherein: the polymer forms a polymer coating layer coated on the particles of the cathode lithium-supplementing material; and/or
the raw material of the particles of the cathode lithium-supplementing material comprises a core containing the cathode lithium-supplementing material and a hydrophobic encapsulation layer coated on the core.

**12.** The preparation method as claimed in claim 10 or 11, wherein: a mass concentration of the polymer having the molecular structure represented by general formula I in the solution is 2%-20%; and/or
a solvent of the solution comprises at least one of methanol, ethanol, n-hexane, cyclohexane, ethyl acetate, toluene, xylene, tetrahydrofuran, N-methylpyrrolidone, and N,N-dimethylformamide.

**13.** A cathode plate, comprising a cathode current collector and a cathode active layer bonded to a surface of the cathode current collector, wherein the cathode active layer contains the cathode lithium-supplementing additive as claimed in any one of claims 1 to 9, or the cathode lithium-supplementing additive prepared by the preparation method as claimed in any one of claims 10 to 12.

**14.** A secondary battery, comprising a cathode plate and an anode plate, wherein the cathode plate is the cathode plate as claimed in claim 13.

**15.** The secondary battery as claimed in claim 14, wherein: a capacity retention rate of the secondary battery after 300 cycles at room temperature is higher than 87%; and/or

a capacity retention rate of the secondary battery after 300 cycles at 45°C is higher than 80%; and/or
a thickness change rate of the secondary battery after 300 cycles at 45°C is less than 15%.

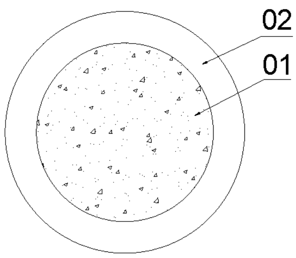


FIG. 1

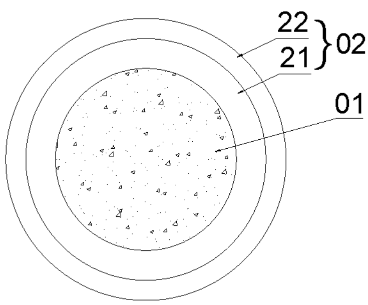


FIG. 2

**INTERNATIONAL SEARCH REPORT**

International application No.
**PCT/CN2023/072609**

**A. CLASSIFICATION OF SUBJECT MATTER**

H01M4/36(2006.01)i;H01M10/0525(2010.01)i;H01M10/42(2006.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 包覆, 补锂, 预锂, 产气, 氮氧自由基, 高分子, 聚合物, 树脂, 有机, 哌啶, coating, lithium supplementation, prelithium, gas production, nitrogen oxygen radicals, polymer, resin, organic, piperidine, tempo

**C. DOCUMENTS CONSIDERED TO BE RELEVANT**

| Category* | Citation of document, with indication, where appropriate, of the relevant passages | Relevant to claim No. |
|---|---|---|
| PX | CN 115312706 A (SHENZHEN DEFANGCHUANGYU NEW ENERGY TECHNOLOGY CO., LTD.) 08 November 2022 (2022-11-08)<br>entire document | 1-15 |
| A | CN 113363484 A (GUIZHOU MEILING POWER SUPPLY CO., LTD.) 07 September 2021 (2021-09-07)<br>entire document | 1-15 |
| A | CN 112599774 A (WUHAN UNIVERSITY OF TECHNOLOGY) 02 April 2021 (2021-04-02)<br>entire document | 1-15 |
| A | CN 110197888 A (BYD CO., LTD.) 03 September 2019 (2019-09-03)<br>entire document | 1-15 |
| A | JP 2006073240 A (NEC CORP.) 16 March 2006 (2006-03-16)<br>entire document | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 April 2023** | **26 April 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/072609**

| Patent document cited in search report | Publication date (day/month/year) | Patent family member(s) | Publication date (day/month/year) |
|---|---|---|---|
| CN 115312706 A | 08 November 2022 | None | |
| CN 113363484 A | 07 September 2021 | CN 113363484 B | 20 January 2023 |
| CN 112599774 A | 02 April 2021 | None | |
| CN 110197888 A | 03 September 2019 | None | |
| JP 2006073240 A | 16 March 2006 | JP 4752218 B2 | 17 August 2011 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202210070564